**Europäisches Patentamt**

**European Patent Office**

**Office européen des brevets**

(19)

(11) Veröffentlichungsnummer: **0 247 446**
**B1**

(12) ## EUROPÄISCHE PATENTSCHRIFT

(45) Veröffentlichungstag der Patentschrift:
16.08.90

(51) Int. Cl.⁵: **B01J 20/32, B01D 15/08**

(21) Anmeldenummer: **87106994.4**

(22) Anmeldetag: **14.05.87**

(54) Nitromodifizierte chromatographische Trägermaterialien, Verfahren zu ihrer Herstellung und ihre Verwendung.

(30) Priorität: **27.05.86 DE 3617805**

(43) Veröffentlichungstag der Anmeldung:
**02.12.87 Patentblatt 87/49**

(45) Bekanntmachung des Hinweises auf die Patenterteilung:
**16.08.90 Patentblatt 90/33**

(84) Benannte Vertragsstaaten:
**BE CH DE FR GB IT LI NL SE**

(56) Entgegenhaltungen:
**US-A- 4 406 792**

**BIOCHEMISTRY, Band 20, 1981, Seiten 6103-6108, American Chemical Society, Easton, US; B.J.B. JOHNSON: "Synthesis of a nitrobenzeneboronic acid substituted polyacrylamide and its use in purifying isoaccepting transfer ribonucleic acids" COLLECTION CZECHOSLOV. CHEM. COMMUN., Band 44, 1979, Seiten 804-807; J. KUCERA: "Preparation of cellulose derivatives for affinity chromatography and immobilization of enzymes. Activation by epichlorohydrin"**

(73) Patentinhaber: **MERCK PATENT GESELLSCHAFT MIT BESCHRÄNKTER HAFTUNG, Frankfurter Strasse 250 Postfach 4119, D-6100 Darmstadt(DE)**

(72) Erfinder: **Boos, Karl-Siegfried, Dr., Sommerau 6 A, D-4790 Paderborn/Marienloh(DE)**
Erfinder: **Wilmers, Bernd, Friedenstrasse 30, D-5780 Bestwig(DE)**
Erfinder: **Sauerbrey, Richard, Schützenallee 1, D-3000 Hannover 81(DE)**
Erfinder: **Schlimme, Eckhard, Prof. Dr. Dr., Lütjenburger Strasse 30, D-2308 Rastorf(DE)**

**Beschreibung**

Die Erfindung betrifft nitrogruppenhaltige modifizierte chromatographische Trägermaterialien, Verfahren zu ihrer Herstellung und ihre Verwendung zur Abtrennung, Anreicherung und quantitativen Bestimmung bestimmter Substanzen bei der Gelpermeationschromatographie und/oder der Affinitätschromatographie.

Es ist bereits ein Verfahren zur direkten und selektiven Aufreinigung und Analyse von insgesamt 18 Ribonucleosiden in Köperflüssigkeiten mit Hilfe eines proteineliminierenden Affinitätsgels bekannt. Als chromatographisches Trägermaterial wurde ein sphärisches, hydrophiles Vinyl-Polymer eingesetzt, das nach Epoxidierung mit m-Aminophenylboronsäure modifiziert war.

Es hat sich jedoch herausgestellt, daß die quantitativen Ergebnisse der Ribonucleosidanalyse nicht optimal waren und eine Reihe wichtiger Inhaltsstoffe von Körperflüssigkeiten sich mit diesem Trägermaterial nur mangelhaft abtrennen, anreichern und quantitativ bestimmen ließ.

Der Erfindung lag die Aufgabe zugrunde, ein modifiziertes Trägermaterial zu finden, das diese Nachteile nicht aufweist und mit dem Inhaltsstoffe von biologischen Materialien ohne vorausgehende Enteiweißung einwandfrei analysiert werden können. Überraschenderweise wurde gefunden, daß ein eine Nitrogruppe enthaltendes mit 1-Amino-(phenyl-5′-boronsäure)-2-hydroxy-3-0-propyl-Gruppen modifiziertes chromatographisches Trägermaterial die gewünschten Eigenschaften besitzt.

Gegenstand der Erfindung ist ein mit 1-Amino-(2′-nitrophenyl-5′-boronsäure)-2-hydroxy-3-0-propyl-Gruppen modifiziertes chromatographisches Trägermaterial, vorzugsweise ein mit 1-Amino-(2′-nitrophenyl-5′-boronsäure)-2-hydroxy-3-0-propyl-Gruppen modifiziertes sphärisches, poröses Gel auf Basis von Vinyl-Polymeren.

Ein weiterer Gegenstand der Erfindung ist ein Verfahren zur Herstellung der chromatographischen Trägermaterialien durch Umsetzung von Hydroxylgruppen-enthaltendem Trägermaterial nacheinander mit 1-Chlor-2,3-epoxypropan und m-Aminophenylboronsäure, das dadurch gekennzeichnet ist, daß anschließend eine Nitrierung durchgeführt wird, sowie die Verwendung des Trägermaterials bei der Gelpermeationschromatographie und/oder Affinitätschromatographie.

Als chromatographische Trägermaterialien kommen alle in der Chromatographie üblichen Trägermaterialien in Frage, sofern sie Hydroxylgruppen enthalten, vorzugsweise sphärische poröse Gele auf der Basis von Vinyl-Polymeren wie z.B. Polyethylenglykoldimethacrylat-Copolymer oder auch Kieselgele, Agarose usw. Die bevorzugten Gele auf Basis von Vinyl-Polymeren (z.B. Fractogel® TSK, Merck, Darmstadt) haben eine hohe mechanische und chemische Stabilität, z.B. eine pH-Stabilität im Bereich von 1 bis 14, eine Druckstabilität bis 150 bar bei vernachlässigbarer Volumenänderung, eine gute Kompatibilität mit organischen Lösungsmitteln; das Gel ist sterilisierbar. Die Oberflächenbelegung mit dem Affinitätsliganden liegt im Bereich von 0,1 bis 0,2, vorzugsweise 0,15 mmol pro g Trockengewicht des Gels.

Die Herstellung der erfindungsgemäßen Nitro-modifizierten chromatographischen Trägermaterialien erfolgt in der Weise, daß man die Hydroxylgruppen-enthaltenden Gele in wäßriger Suspension zunächst mit 1-Chlor-2,3-epoxypropan umsetzt und das erhaltene Produkt anschließend mit einer wäßrigen Lösung von m-Aminophenylboronsäure-Hydrochlorid reagieren läßt. Das erhaltene, mit 1-Amino-(phenyl-5′-boronsäure)-2-hydroxy-3-0-propyl-Gruppen modifizierte Trägermaterial wird anschließend nitriert. Dazu wird ein Gewichtsteil des modifizierten Gels in 20 Gewichtsteilen 40%iger Salpetersäure suspendiert, gerührt, abfiltriert, gewaschen und getrocknet.

Die erfindungsgemäß hergestellten Gele eignen sich hervorragend zur Gelpermeationschromatographie und zur Affinitätschromatographie. Diese kombinierten Eigenschaften erlauben vorzugsweise die Gruppen-spezifische Abtrennung und Anreicherung von diol-haltigen Substanzen aus proteinhaltigen Lösungen unter Drucken von bis zu 150 bar. Die dargestellten Gele eignen sich insbesondere zur Abtrennung und Anreicherung von Catecholaminen, natürlichen und modifizierten Ribonucleosiden, Zuckern, glycosylierten Proteinen, Oligo- und Polyribonucleotiden aus biologischen Materialien wie z.B. Serum, Urin, Liquor cerebrospinalis, Körpersekrete und Gewebshomogenate.

Die quantitative Bestimmung der verschiedenen Parameter wird vorzugsweise in Verbindung mit einem vollautomatischen hochleistungsflüssigchromatographischen Analysensystem durchgeführt.

Beispiel 1

Herstellung des mit 1-Amino-(2′-nitrophenyl-5′-boronsäure)-2-hydroxy-3-0-propyl-Gruppen modifizierten Trägermaterials.

1. Epoxidierung

1 Gewichtsanteil trockenes gepulvertes Polyethylenglykoldimethacrylat-Copolymer wird in 4 Gewichtsanteilen bidest. Wasser suspendiert und mit 1,1 Gewichtsanteilen 1-Chlor-2,3-epoxypropan versetzt. Die Epoxidierung läuft unter Rühren über 4 h bei 45 °C und konstantem pH-Wert (9,0) ab. Das epoxidierte Gel wird abgenutscht und nacheinander mit 4 Gewichtsanteilen bidest. Wasser, 4 Gewichtsanteilen Methanol, 4 Gewichtsanteilen bidest. Wasser und 4 Gewichtsanteilen Methanol gewaschen und getrocknet.

2. Umsetzung mit m-Aminophenylboronsäure

0,13 Gewichtsanteile m-Aminophenylboronsäure-Hydrochlorid werden in 10 Gewichtsanteilen bidest. Wasser gelöst, der pH-Wert mit 10 Mol/l NaOH auf pH 10,5 eingestellt und mit 1 Gewichtsanteil des epoxidierten Trägermaterials unter Rühren versetzt. Die Umsetzung erfolgt über 24 h bei 55 °C. Das erhaltene Gel wird abgenutscht, nacheinander zweimal mit je 10 Gewichtsanteilen bidest. Wasser und 10 Gewichtsanteilen Methanol gewaschen und getrocknet.

3. Nitrierung

In einem Eisbad wird in 20 Gewichtsanteile vorgelegte 40 %ige Salpetersäure p.A. 1 Gewichtsanteil des nach 2. erhaltenen Gels suspendiert und 1 h gerührt. Anschließend wird der Reaktionsansatz bei Raumtemperatur für eine weitere Stunde gerührt, das nitrierte Gel abgenutscht, mit bidest. Wasser bis zur neutralen Reaktion gespült und mit 10 Gewichtsanteilen Methanol gewaschen und getrocknet.

Beispiel 2

Quantitative Bestimmung der Catecholamine Noradrenalin, Adrenalin und Dopamin aus 100 μl Humanurin

Die Bestimmung wird mit einem hochleistungsflüssigchromatographischen Analysensystem durchgeführt, das aus einem automatischen Probengeber (Merck-Hitachi, 655 A-40), zwei HPLC-Pumpen (Merck-Hitachi, 655 A-11), einer mit dem nach Beispiel 1 hergestellten Gel gepackten Vorsäule (Maße: 10 bis 100 mm Länge, 3 bis 20 mm I.D.), einer analytischen Trennsäule (z.B. LiChrosorb® RP-18, 7 μm, 250 × 4 mm I.D.), einem elektrisch betriebenen Hochdruck-Sechswegeventil (Krannich, ELV 7000), einem Detektor (z.B. Fluorimeter, Merck-Hitachi, F-1000), einem Integrator (Merck-Hitachi, D-2000) sowie einem Steuermodul (Merck-Hitachi, LC-Controller, L-5000) besteht.

Die vollautomatische Catecholamin-Analyse mit Säulenschalttechnik verläuft in 5 Stufen:

1. chemoselektive Bindung und Aufkonzentrierung der Catecholamine an der stationären, druckstabilen Affinitäts-Phase der Vorsäule;
2. quantitative Elution der physiologischen Restmatrix von der Vorsäule;
3. quantitative Elution der Catecholamine von der Vorsäule und "On-line"-Transfer der Catecholamine auf die nachgeschaltete analytische Säule;
4. Trennung der Catecholamine unter isokratischen Bedingungen und Detektion der nativen Fluoreszenz;
5. Rekonditionierung der Vorsäule.

Im Analysensystem werden die folgenden Puffer verwendet:

für die Vorsäule:

0,2 M (26,8 g/l) Diammoniumhydrogenphosphat
10 mM (3,7 g/l) EDTA
pH 8,7, eingestellt mit 25 %iger Ammoniaklösung

für die analytische Säule:
0,1 M (13,8 g/l) Natriumdihydrogenphosphat
5 mM (1,08 g/l) Octan-1-sulfonsäure
pH 3,0, eingestellt mit 20 %iger Phosphorsäure

Die Analysenergebnisse sind in der folgenden Tabelle zusammengestellt:

| | $[\text{nmol/ml}]$ $\overline{x} \pm s$ | $VK_S(\%)$ | $VK_T(\%)$ | $R_t\,[\text{min}]$ $\overline{x} \pm s$ | $VK_S(\%)$ | $VK_T(\%)$ | $R\,(\%)$ |
|---|---|---|---|---|---|---|---|
| Noradrenalin A) | $0,53 \pm 0,03$ | 5,66 | – | $6,48 \pm 0,05$ | 0,69 | – | $93,61 \pm 4,14$ |
| B) | $0,47 \pm 0,01$ | 2,15 | 1,89 | $6,53 \pm 0,05$ | 0,75 | 1,95 | $99,07 \pm 1,24$ |
| Adrenalin A) | $0,15 \pm 0,01$ | 6,67 | – | $8,15 \pm 0,07$ | 0,87 | – | $95,61 \pm 3,25$ |
| B) | $0,20 \pm 0,01$ | 3,43 | 0,61 | $7,98 \pm 0,08$ | 0,96 | 2,65 | $96,84 \pm 0,93$ |
| Dopamin A) | $1,90 \pm 0,05$ | 2,63 | – | $14,98 \pm 0,09$ | 0,60 | – | $99,93 \pm 2,26$ |
| B) | $1,86 \pm 0,06$ | 3,25 | 2,76 | $14,87 \pm 0,11$ | 0,72 | 2,86 | $97,18 \pm 0,70$ |

A = Urin (100 $\mu$l), B = Standard;

Fluorimetrische Detektion: Excitation 275 nm, Emission 330 nm;

VK = Variationskoeffizient; S = Serie (n = 20); T = Tag/Tag (n = 7)

R = Wiederfindung ($\overline{x} \pm$ VK %); s = Standardabweichung.

EP 0 247 446 B1

Der vollautomatische Catecholamin-Analysator besitzt eine kurze Anlauf- und Analysenzeit (max. 30 min) und zeichnet sich - neben seiner Praktikabilität - durch eine hohe Selektivität, Stabilität, Präzision und Nachweisempfindlichkeit aus. Die nahezu quantitativen Wiederfindungsraten der analysierten Catecholamine (vgl. Tabelle) unterstreichen die Zuverlässigkeit des Analysensystems. Die Konzentrationsbestimmung der biogenen Amine erreicht eine hohe Präzision in der Serie und in der Tag/Tag-Analyse. Darüber hinaus beweisen kleine Variationskoeffizienten für die Retentionszeiten die ausgezeichnete Stabilität des Systems (vgl. Tabelle).

**Patentansprüche**

1. Mit 1-Amino-(2'-nitrophenyl-5'-boronsäure)-2-hydroxy-3-0-propyl-Gruppen modifiziertes chromatographisches Trägermaterial.

2. Mit 1-Amino-(2'-nitrophenyl-5'-boronsäure)-2-hydroxy-3-0-propyl-Gruppen modifiziertes sphärisches, poröses Gel auf Basis von Vinyl-Polymeren.

3. Verfahren zur Herstellung von chromatographischen Trägermaterialien nach den Ansprüchen 1 und 2, durch Umsetzung von Hydroxylgruppen-enthaltendem Trägermaterial nacheinander mit 1-Chlor-2,3-epoxypropan und m-Aminophenylboronsäure, dadurch gekennzeichnet, daß anschließend eine Nitrierung durchgeführt wird.

4. Verwendung des Trägermaterials nach den Ansprüchen 1 und 2 bei der Gelpermeationschromatographie und/oder Affinitätschromatographie.

**Claims**

1. A chromatographic support material which is modified with 1-amino-(2'-nitorphenyl-5'-boric acid)-2-hydroxy-3-0-propyl groups.

2. A globular, porous gel based on vinyl polymers and modified with 1-amino-(2'-nitrophenyl-5'-boric acid)-2-hydroxy-3-0-propyl groups.

3. A process for the preparation of chromatographic support materials according to Claims 1 and 2, by successively reacting an hydroxyl group-containing support material with 1-chloro-2,3-epoxypropane and m-aminophenylboric acid, characterized in that a nitration is subsequently carried out.

4. The use of the support materials according to Claims 1 and 2 in gel-permeation chromatography and/or in affinity chromatography.

**Revendications**

1. Matériau de support chromatographique modifié par des groupes 1-amino-(2'-nitrophényl-5'-borique)-2-hydroxy-3-0-propyliques.

2. Gel poreux sphérique à base de polymères vinyliques modifiés par des groupes 1-amino-(2'-nitrophényl-5'-borique)-2-hydroxy-3-0-propyliques.

3. Procédé de fabrication de matériaux de support chromatographiques selon les revendications 1 et 2 en faisant réagir un matériau de support contenant des groupes hydroxyle successivement avec du 1-chloro-2,3-époxypropane et de l'acide m-aminophénylborique, caractérisé en ce que l'on effectue ensuite une nitration.

4. Utilisation du matériau de support selon les revendications 1 et 2 pour la chromatographie de perméation sur gel et/ou la chromatographie d'affinité.